# EUROPEAN PATENT SPECIFICATION

(11) **EP 4 045 445 B1**
(45) Date of publication and mention of the grant of the patent: **04.12.2024**
(21) Application number: 20799845.1
(22) Date of filing: 08.10.2020
(51) Int. Cl.: B65H 20/02, B65H 26/02, G01B 11/30, G01M 17/02, G01N 21/892, G01B 11/06, G01B 11/25, G01B 11/28, G01N 21/89

(54) **METHOD AND APPARATUS FOR DOSING A CONTINUOUS ELONGATED ELEMENT**
VERFAHREN UND VORRICHTUNG ZUR DOSIERUNG EINES KONTINUIERLICHEN LÄNGLICHEN ELEMENTS
PROCÉDÉ ET APPAREIL DE DOSAGE D'UN ÉLÉMENT ALLONGÉ CONTINU

(30) Priority: 16.10.2019 IT 201900019052
(43) Date of publication of application: 24.08.2022
(73) Proprietor: Pirelli Tyre S.p.A., 20126 Milano (IT)
(72) Inventor: MONTEROSSO, Antonio, 20126 Milano (IT); SPALIVIERO, Mattia, 20126 Milano (IT); TESTI, Stefano, 20126 Milano (IT); LONGONI, Alessio, Guanajuato, 36275 (MX)
(74) Representative: Tirloni, Bartolomeo
(86) International application number: PCT/IT2020/050249
(87) International publication number: WO 2021/074939

(56) References cited:
- EP-A1- 3 007 421
- WO-A1-2013/048744
- WO-A1-2018/216371
- JP-A- 2014 153 055
- JP-A- 2017 145 133
- KR-A- 20140 001 927

## Description

### Technical field of the invention

The present invention relates to a method and to an apparatus for dosing a continuous elongated element.

### State of the art

In the context of the tyre production processes, it is common processing or manipulating continuous elongated elements (for example ribbon-like elements), typically entirely of elastomeric compound or containing elastomeric compound in combination with other elements. For example, it is known feeding a continuous elongated element to continuous processing machinery for processing in continuous the material.

By "continuous elongated element" it is meant a structurally cohesive element, having a longitudinal dimension (which defines a length) much greater than the remaining dimensions (which define a width and a thickness), and having a section perpendicular to the longitudinal dimension of any shape (e.g. rectangular, circular, oval, irregular, etc.).

By "feeding" it is meant the transport of the elongated element through a feeding point for the purpose of any type of treatment (e.g. mixing, extrusion, cutting, spreading or winding, coupling with other elements, rolling, storage, etc.).

By 'flow rate' of a continuous elongated element it is meant the quantity (e.g. expressed in terms of volume or mass, linked to each other by the density of the material of which the elongated element is made) of continuous elongated element which passes through a point per unit time.

By the expression "dosing a continuous elongated element" it is meant the feeding in continuous of such element to a point (e.g. to a station such as a, preferably continuous, processing machinery, but also to a storage pallet or a winding reel, etc.) measuring and controlling the feeding flow rate.

The expression "continuous processing machinery" indicates a machinery into which the material to be processed (e.g. the continuous elongated element and/or the other ingredients of the compound) for obtaining a desired product is fed in continuous (apart from the possible stop of the machinery due to maintenance, or variation of the recipe of the desired product) and from which the product is discharged by a (substantially) continuous flow.

For example, the continuous elongated element can be directly fed to a feeding portion of a continuous processing machinery, wherein this feeding portion typically comprises a (at least one) feeding screw, which captures and drags the continuous elongated element to a mixing chamber of the processing machinery. Typically, the continuous elongated element is fed to the feeding screw of the aforementioned machinery simply by gravity, for example through a hopper.

The feeding of the continuous elongated element to the machinery can take place in combination or not with the feeding of other ingredients.

The continuous processing machinery comprise the continuous mixers for the production of compounds (e.g. masterbatch, intermediate or final compounds), such as for example two screw mixers (i.e. twin screw), typically co-rotating, ring extruders (i.e. mixers having a plurality of co-rotating screws arranged in an annular arrangement), planetary extruders (i.e. mixers having a rotating central spindle and a plurality of planetary spindles arranged around, and intermeshed with, the central spindle to rotate around the central spindle and on themselves following the rotation of the central spindle). These mixers are capable of imparting an energetic mixing to the materials introduced therewith, both in the state of individual ingredients (separated or combined), and in the state of compound, even cold, and the active elements of the mixers (e.g. screws and/or spindles) are characterized along their longitudinal development by transport portions (e.g. helical threads), to advance the material, interspersed with mixing portions (for example compressive masticating elements and shear masticating elements).

The continuous processing machinery also comprise the extruders for the production of semi-finished green products (e.g. tread band, beads, etc.) used in the production of tyres, such as single-screw extruders and twin-screw extruders (typically counterrotating), extruders for semi-finished products (e.g. profilometer), feeding extruders for fabric gumming calenders. These extruders, while inevitably imparting a low degree of mixing, essentially perform the function of pushing the compound towards the outlet mouth. They are indeed typically not able to produce a compound starting from the individual ingredients. Furthermore, it is known feeding a continuous elongated element of elastomeric compound to a forming drum for producing green tyres.

The terms 'upstream', 'downstream', 'in an intermediate, initial, terminal position', 'inlet', 'outlet' and the like refer to relative positions or placements between elements and/or regions of the apparatus with reference to the advancement direction of the continuous elongated element.

By 'substantially perpendicular' with respect to geometric elements (such as straight lines, planes, surfaces, etc.) it is meant that these elements (or elements parallel thereto and incident to each other) form an angle comprised between 90°-15° and 90°+15°, preferably comprised between 90°-10° and 90°+10°, ends included.

By 'substantially parallel' with respect to the aforementioned geometric elements it is meant that these elements (or elements parallel thereto and incident to each other) form an angle comprised between 0°-15° and 0°+15°, preferably comprised between 0°-10° and 0°+10°, ends included.

The terms 'optical', 'bright' and the like refer to an electromagnetic radiation that does not necessarily fall strictly within the optical band (i.e. the 400-700 nm band), but more generally falls within a wider neighbourhood of the optical band, for example from the ultraviolet to the infrared (for example the wavelength of the light radiation can be comprised between about 100 nm and about 10 µm).

By "matrix camera" it is meant a camera whose sensor has the pixels arranged according to a rectangular matrix having the two dimensions of comparable length (for example the two dimensions differ by less than one order of magnitude, as in the 16x9, 4x3 or 3x2 formats). By extension, a "matrix image" is a digital image acquired by a matrix camera.

By "optical axis" of a lens it is meant the line along which a rotation symmetry of the lens exists.

By "linear laser source" it is meant a laser source capable of emitting a linear laser beam, namely a laser beam lying in a "propagation plane" and having as direction of propagation a "propagation axis", belonging to the propagation plane and passing through the laser source. An intersection of the linear laser beam with a physical surface with reflective/diffusive properties, such as the surface of the elongated element, generates a 'laser line'.

It is defined 'reflected laser line' the image of said laser line in an image acquired by a matrix camera.

The document JP2016043660A discloses a method for supplying a rubber material to an extruder, the method having a measurement step for measuring the mass of the rubber material supplied to the extruder with a mass measurement device and an adjustment step for adjusting the supplied amount of rubber material based on the result of the measurement step. Document JP 2014 153055 A discloses a monitoring and process control of a transport of a slurry containing bubbles, document WO 2018/216371 A1 discloses a monitoring method and system to monitor areal extensions and a shape of a rubber element/sheet.

### Summary of the invention

The Applicant has realized that it is advantageous to be able to accurately dose a continuous elongated element.

For example, the Applicant has realized that the quality of the compounds produced and/or of the semi-finished products made by the aforementioned continuous processing machinery strongly depends on the flow rate of the continuous elongated element fed to the continuous processing machinery and on the accuracy with which such flow rate is controlled. In particular, in the production of compounds in which the continuous elongated element must be dosed in continuous together with other ingredients, it is extremely advantageous to have a high dosing accuracy of the elongated element.

The Applicant has also realized that the continuous elongated element may have some unevennesses in the shape of the cross section moving along the longitudinal dimension, such as for example surface defects, such as for example surface cavities and/or protuberances, and/or variations in shape of the contour of the cross section (thinning and/or widening, etc.).

It therefore follows that, in such cases, even if the feeding speed of the elongated element is kept controlled, the actual feeding flow rate of the elongated element is not under control.

According to the Applicant, the method for dosing described in JP2016043660A is complex and/or not accurate. For example, due to the linear extension of the tract of the weighed element, e.g. comprised between 0.5 m and 2 m, the method results having a low spatial resolution of the measurement of the mass per unit length, which in turn could result in a low temporal resolution of the control of the flow rate.

Moreover, in the method of JP2016043660A, the portions of conveyor belt upstream and downstream of the measurement device can support part of the weight of the portion of material subjected to measurement, distorting the measurement (e.g. returning a value lower than the real one). On the other hand, by moving these portions of conveyor belt away from the measurement device, the material suspended in the air upstream and downstream of the measurement device is partially weighed by the measurement device, with consequent overestimation of the real value. In any case, the measurement does not return a real and/or accurate value.

The Applicant has therefore faced the problem of dosing a continuous elongated element in a simple and/or accurate way and/or with high temporal resolution.

According to the Applicant, the aforesaid problem is solved by a method and by an apparatus for dosing a continuous elongated element in which, on the basis of one or more in continuous optical measurements, it is calculated in continuous, at least in an approximate way, the areal extension of the cross section of the continuous elongated element while the latter is advanced, and the feeding speed is adjusted as a function of this areal extension.

According to an aspect, the invention relates to a method for dosing a continuous elongated element according to claim 1.

According to an aspect, the invention relates to an apparatus for dosing a continuous elongated element according to claim 10.

By the expression "geometrical information relating to a section" it is meant information of geometric nature sufficient to calculate, at least in an approximate way, the value of the areal extension of said section.

By the expression " in continuous" referred to an operation relating to the continuous elongated element it is meant the temporally close repetition of this operation in order to spatially resolve this elongated element in an appropriate way, for example so that this operation is performed on successive contiguous points of the elongated element longitudinally distant from each other in the order of the centimetres or even less than one centimetre.

According to the Applicant the detection of the geometrical information relating to a cross section and the calculation of the value representative of the areal extension of this section as a function of the geometrical information itself allows to obtain in a simple and/or rapid and/or accurate way a measurement of this areal extension.

The detection performed optically (and therefore without contact) contributes to obtain a desired accuracy of the measurement of the section and at the same time allows to avoid stopping and/or disturbing the advancement of the elongated element during the detection.

The detection performed in continuous during the advancement of the elongated element allows to detect with high spatial resolution any morphological change of the elongated element, such as any surface defects and/or changes in shape of the section.

The use of the value of the areal extension of the section, which is substantially punctual with respect to the advancement direction, together with the in continuous adjustment of the feeding speed as a function of this value and of the reference value of the feeding flow rate at the feeding point, allows to obtain a high temporal resolution of the adjustment of the respective flow rate actually fed into the feeding point
For example, in case the reference value is constant over time, the present invention allows to keep substantially constant the flow rate actually fed (for example as the value of the extension of the section decreases, for example due to lack of material on the surface - hollows- and/or shape tapering of the section itself, the feeding speed of the elongated element is increased, and vice versa).

In case of variation of the reference value during the feeding, the in continuous adjustment also allows to adapt to these variations of the feeding flow rate request (e.g. transient regimes).

The high temporal resolution of the adjustment of the flow rate actually fed is particularly advantageous to quickly and accurately adapt to the variations of the areal extension of the section of the elongated element and/or to the aforementioned variations of the flow rate request.

The present invention therefore achieves a continuous dosing of the elongated element in a simple, accurate way and with a high temporal resolution.

The present invention in one or more of the above aspects may have one or more of the following preferred features.

Typically said feeding point is at an outlet of said first tract.

Typically said advancement direction is substantially aligned with a longitudinal dimension of said continuous elongated element.

Preferably said section of the continuous elongated element has a parallelogram contour, more preferably rectangular and/or having shorter sides and longer sides with length ratio greater than or equal to ten (i.e. the element is ribbon-like).

Preferably it is provided advancing said continuous elongated element by gripping said longer sides (i.e. the axes of rotation of the rollers are - substantially - parallel to the longer sides of the section of the elongated element).

Typically the continuous elongated element consists of a homogeneous material. Preferably the continuous elongated element comprises, or it entirely consists of, an elastomeric compound.

Preferably said command and control unit is programmed for performing one or more of the following operations of the method of the present invention.

Preferably it is provided calculating in continuous a theoretical value of the feeding speed as a function of a ratio between said reference value of feeding flow rate and said value representative of the areal extension of the section.

Preferably adjusting in continuous said feeding speed comprises setting said feeding speed equal to said theoretical value.

Preferably said feeding flow rate is a volumetric flow rate. Preferably said reference value of the feeding flow rate is calculated as a function of a reference value of a feeding mass flow rate and of a density (e.g. average) of said continuous elongated element. The desired mass flow rate is typically useful in the aforesaid processes of production of compounds and/or of realization of semi-finished products.

Preferably it is provided calculating (preferably as a function of said feeding speed) a time delay spent by said section for going from said detection point to said feeding point.

Preferably it is provided adjusting in continuous said feeding speed also as a function of said time delay, more preferably it is provided adjusting in continuous the feeding speed when the section has reached the feeding point. In this way, the elongated element is correctly fed to the feeding point.

Preferably said optical detection system comprises a first optical detection device comprising a matrix camera, having an optical axis, and a linear laser source, able to emit a linear laser beam having a propagation axis (arranged at a certain angle with respect to the optical axis, for example 40°). In this way it is possible to acquire the geometrical information by laser triangulation, which is a non-contact technology and which allows a line scan of the surface of the continuous element, i.e. a substantially punctual scan along the longitudinal direction.

Preferably detecting said geometrical information comprises detecting an altimetric profile of at least a first portion of a contour of said section with respect to a reference height. Preferably said optical detection system, more preferably said first optical detection device, is structured (and/or positioned) for detecting an (at least one) altimetric profile of a first portion of a contour of said section with respect to a reference height.

In this way the calculation of the value representative of the areal extension takes into account the actual conformation of at least the first portion of the contour of the elongated element.

By "altimetric profile" it is meant the trend of the heights of the points of the contour with respect to the reference height which represents the zero height.

By "portion of the contour" it is meat a part of, and not the whole, contour.

Preferably said first portion of the contour of the section belongs to a first surface of said continuous elongated element (when said continuous elongated element is in said first tract). Preferably said optical axis or said propagation axis is substantially perpendicular to the first surface of the continuous elongated element.

In one embodiment, it is provided detecting only said altimetric profile of said first portion of the contour of the section. Preferably said optical detection system is structured for detecting only said altimetric profile of said first portion of the contour of the section. In other words, there are no detected altimetric profiles of portions of the contour further to said first portion and there are no detection devices further to the first optical detection device. Preferably said first portion of the contour is a continuous portion. Preferably said first portion of the contour extends for at least a third, more preferably for at least 40%, of a whole development of the contour.

In this way the onerousness of collecting and/or of processing of the geometrical information is limited, as it is for example possible to detect the altimetric profile only partially and to reconstruct the rest of the contour of the section using a simple geometrical shape (e.g. a broken line such that the calculation of the value of the areal extension of the section is simple and/or of low computational effort).

Preferably calculating in continuous said value representative of the areal extension of said section comprises calculating an area enclosed by said altimetric profile of the first portion of the contour of the section. In other words, the real section is completed with a broken line.

Preferably it is provided advancing the continuous elongated element with a (typically planar) surface of the continuous elongated element in contact with a surface of a transport element (e.g. roller or belt of the advancement system), wherein a height of said surface of the transport element corresponds to said reference height.

Preferably said optical axis of the matrix camera crosses (in the absence of the elongated element) a surface of a transport element of the continuous elongated element.

In this way, the altimetric profile directly represents the local thickness of the elongated element.

In one embodiment, said optical detection system comprises a second optical detection device comprising a respective matrix camera, having a respective optical axis, and a respective linear laser source able to emit a respective linear laser beam having a respective propagation axis.

In one embodiment, detecting said geometrical information comprises detecting an altimetric profile of a second portion of the contour of said section with respect to a respective reference height.

In one embodiment, said optical detection system, more preferably said second optical detection device, is structured (and/or positioned) for detecting an altimetric profile of a second portion of the contour of said section.

In this way the accuracy of the calculation of the value representative of the areal extension of the section is further improved.

Preferably said second portion of the contour of the section belongs to a second surface of said continuous elongated element (when said continuous elongated element is in said first tract).

Preferably said second surface is arranged at (substantially) opposite side of said continuous elongated element with respect to said first surface. In this way, the detection of the altimetric profile of the two portions can be sufficient to detect the altimetric profile of the whole or of almost the whole real contour of the section (such as for example in case of elongated element with ribbon-like shape wherein there are detected the altimetric profiles of the two faces of the element with greater surface extension), to the further advantage of the accuracy of the calculation of the value representative of the areal extension of the section.

Preferably the continuous elongated element is suspended in air at said detection point. In this way the optical detection is not hindered by structural components of the apparatus (e.g. rollers, belts, etc. of the advancement system).

Preferably said first, and possibly second, portion of the contour of the section develops/develop along substantially a whole extension of said continuous elongated element along a direction perpendicular to said advancement direction. In this way, the optical detection system, during the advancement of the elongated element, can detect the whole width (in the transversal direction) of the section, useful for calculating the areal extension of the section.

Preferably it is provided determining a same reference height for the altimetric profile of said first and second portion of the contour of the section. In this way, the calculation of the value representative of the areal extension of the section is facilitated, as the two altimetric profiles are easily mutually linkable.

Preferably detecting an altimetric profile of the first, and/or second, portion of the contour of the section comprises:
- illuminating with a linear laser beam respectively the first, and/or the second, portion of the contour;
- acquiring a matrix image of a matrix portion of surface of the continuous elongated element, said matrix portion comprising the first, and/or the second, portion of the contour, wherein the matrix image comprises a laser line reflected respectively by the first, and/or by the second, portion of the contour;
- calculating said altimetric profile by triangulation processing of the reflected laser line.

Preferably each matrix camera is adapted to acquire a matrix image of a matrix portion of the surface of the continuous elongated element, said matrix portion comprising the first or the second portion of the contour of said section, wherein the matrix image comprises a laser line reflected respectively by said first or second portion of the contour.

Preferably said detection system is programmed for calculating an altimetric profile of the first or of the second portion of the contour by triangulation processing of the respective reflected laser line.

The aforementioned laser triangulation technique has proved to be particularly reliable for the detection of the aforementioned surface defects and/or variations in shape of the section, with further advantage of simplicity and/or accuracy and/or rapidity of the geometrical information detection.

Preferably said first tract comprises a detection portion which contains the detection point. Preferably an inlet of said detection portion coincides with an inlet of said first tract.

In one embodiment said detection portion coincides with said first tract (an outlet of said detection portion coinciding with an outlet of said first tract).

In one embodiment said first tract comprises a buffering portion placed downstream of (and typically continuous to) said detection portion. Preferably an outlet of said buffering portion coincides with an outlet of said first tract.

Preferably said advancement system comprises an advancement device structured for gripping said continuous elongated element. Preferably said advancement device comprises a (at least one) motorized roller controllable by said command and control unit and a further roller (optionally also motorized and controllable by said command and control unit) arranged (substantially) parallel to, and kept in thrust against, said motorized roller.

Preferably said advancement device is placed at an outlet of said detection portion and it is structured for pulling said continuous elongated element along said detection portion. In this way it is possible to move a non-rigid elongated element, such as typically a ribbon-like element made of green elastomeric compound.

In one embodiment said advancement device is suitable for (and/or arranged for) feeding said continuous elongated element directly to said feeding point. In this way the advancement system is structurally simple.

In one embodiment adjusting in continuous said feeding speed comprises commanding in continuous said advancement device.

In one embodiment said advancement system further comprises a feeding device, distinct and separated from said advancement device. Preferably said feeding device is structured for gripping said continuous elongated element and it is suitable for (and/or arranged for) feeding said continuous elongated element (preferably directly) to said feeding point. Preferably said feeding device is placed at an outlet of said buffering portion and it is structured for pulling said continuous elongated element along said buffering portion. Preferably said feeding device comprises one or more of the features of said advancement device.

In this way, it is provided the movement and the feeding of the elongated element along the buffering portion decoupled from said detection portion.

In one embodiment adjusting in continuous said feeding speed comprises commanding in continuous said feeding device.

In one embodiment it is provided detecting in continuous (with or without contact) a tension of said continuous elongated element along said buffering portion, and comparing in continuous said tension detected along said buffering portion with a respective reference tension. Preferably it is provided commanding in continuous said advancement device as a function of said comparison between the tension detected along said buffering portion and the respective reference tension. In this way it is possible to command the advancement device as a consequence of the adjustment of the feeding speed, since the latter could lead to a variation in the tension of the elongated element along the buffering portion.

Preferably it is provided subjecting to tension said continuous elongated element along said detection portion.

Preferably said apparatus comprises a first tensioning system for tensioning said continuous elongated element along the detection portion.

In this way it is facilitated, and/or it is improved the accuracy of, the detection of the geometrical information (in particular of one or more altimetric profiles). For example, it is possible to reduce the possibility of onset of folds and/or wrinkles of the elongated element, which could distort the detection of the altimetric profile. Moreover, in case of detection of the altimetric profile of the first and second portion of the contour of the section, it is for example possible to stabilize the position of the elongated element in the suspended in air tract in which the altimetric profile is detected, to limit the movements of the elongated element that could introduce errors in the detection of the altimetric profile.

Preferably said command and control unit is connected to said first tensioning system.

Preferably it is provided (e.g. said first tensioning system is structured and/or configured for) detecting in continuous (with or without contact) a first tension of said continuous elongated element along said detection portion, and comparing in continuous said detected first tension with a respective reference tension. Preferably it is provided commanding in continuous said first tensioning system as a function of said comparison between the detected first tension and the respective reference tension.

Preferably said first tensioning system comprises a respective tension sensor suitable for detecting in continuous (with or without contact) a tension of said continuous elongated element. For example, the tension sensor can be with mechanical contact, such as a linear potentiometer, or optical, such as a laser device suitable for measuring a distance.

Preferably said first tensioning system comprises a brake device for (at least partially) braking an advancement of said continuous elongated element along said detection portion. Preferably said brake device comprises a roller equipped with brake disc controllable by said command and control unit and a respective further roller arranged (substantially) parallel to, and kept in thrust against, said roller equipped with brake. Preferably said brake device is arranged upstream of said advancement device, more preferably at an inlet of said detection portion. In this way the brake device is structured and rationally arranged to be capable of tensioning the elongated element along the detection portion of the first tract in collaboration with the feeding device, as explained below.

Preferably said command and control unit is programmed for comparing in continuous said detected first tension with a respective reference tension and for commanding in continuous said first tensioning system (e.g. said brake device) as a function of said comparison between the detected first tension and the respective reference tension. The Applicant has in fact observed that it is particularly advantageous to be able to maintain and/or adjust in continuous an appropriate tension of the elongated element along the detection portion to keep it in a neighbourhood of a desired value suitable to limit the aforementioned disturbances of the elongated element.

Preferably it is provided subjecting to tension said continuous elongated element along said detection portion by pulling said continuous elongated element at one end of said detection portion and at the same time by braking said continuous elongated element at an opposite end. In this way the elongated element is tensioned in a simple way.

Preferably it is provided subjecting to tension said continuous elongated element upstream of said detection portion.

Preferably said apparatus comprises a second tensioning system, more preferably arranged upstream of said first tensioning system, for tensioning said continuous elongated element upstream of said detection portion. This second tensioning system operates a pre-tensioning of the elongated element. The Applicant has realized that the pre-tensioning facilitates the stability (of tension and/or of position) of the elongated element along the detection portion and the detection of geometrical information, as will be better clarified below.

Preferably said command and control unit is connected to said second tensioning system.

Preferably it is provided (e.g. said second tensioning system is structured and/or configured for) detecting in continuous a second tension of said continuous elongated element upstream of said detection portion, and comparing said detected second tension with a respective reference tension. Preferably it is provided commanding in continuous said second tensioning system as a function of said comparison between the detected second tension and the respective reference tension.

Preferably said second tensioning system comprises a respective tension sensor suitable for detecting in continuous (with or without contact) a tension of said continuous elongated element.

Preferably said command and control unit is programmed for comparing in continuous said detected second tension with a respective reference tension and for commanding in continuous said second tensioning system as a function of said comparison between the detected second tension and the respective reference tension. The Applicant has in fact observed that it is particularly advantageous to be able maintain and/or adjust in continuous an appropriate tension of the elongated element even upstream of the detection portion to make that the tension always remains close to an optimal value such that to facilitate the stabilizing function of the pre-tensioning, as better explained below.

Preferably said reference tension along said detection portion is greater than said reference tension upstream of said detection portion, and/or in the buffering portion. In other words, the apparatus is structured and/or programmed for subjecting the elongated element to a higher tension along the detection portion with respect to the tension to which it is subjected upstream of the detection portion and/or along the buffering portion. The lower tension is typically such that to allow the portion of the elongated element to create a slight bend (due to the weight of the elongated element), which provides abundance of elongated element. This allows to mitigate, and possibly eliminate, any perturbations to which the elongated element may be subjected and which, propagating along the latter, could reach the detection point. For example, the portion of elongated element upstream of the detection portion, and/or along the buffering portion, could undergo sudden accelerations (positive and/or negative, for example due to variations in adhesion between portions of the elongated element folded on themselves and/or between the elongated element and a storage device and/or as a consequence of adjustments of the feeding speed) parallelly to the advancement direction, which are mitigate in order not to hinder and/or distort the detection of the geometrical information (e.g. by vertically moving the elongated element, causing folds and/or wrinkles, etc.).

Preferably said second tensioning system comprises a movement device for moving said continuous elongated element upstream of said detection portion. Preferably, said movement device is structured to be able to grip said continuous elongated element. Preferably said movement device comprises a respective motorized roller controllable by said command and control unit and a respective further roller arranged (substantially) parallel to, and kept in thrust against, said respective motorized roller. In this way, for example, it is possible to draw the elongated element into the apparatus and to unload/unwind it from a respective storage device, such as a pallet or a winding reel.

Preferably said apparatus comprises a centring system, more preferably arranged upstream of said detection portion, for centring said continuous elongated element perpendicularly to said advancement direction.

Preferably it is provided centring said continuous elongated element perpendicularly to said advancement direction.

In this way it is facilitated the operation of one or more of the systems of the apparatus, such as the advancement system and the optical detection systems.

Preferably said centring system comprises a pair of rollers having respective axes of rotation (substantially) perpendicular to said motorized roller of said advancement device and to said roller equipped with brake of said brake device. In this way it is possible to easily centre the elongated element, for example being able to fold it into a plane where it is easily foldable (such as a plane perpendicular to the faces of greater extension for a substantially ribbon-like elongated element).

### Brief description of the drawings

The features and the advantages of the present invention will be further clarified by the following detailed description of some embodiments, presented by way of nonlimiting example of the present invention, with reference to the attached figures, in which:
figure 1 schematically shows a first embodiment of an apparatus for dosing a continuous elongated element according to the present invention;
figure 2 schematically shows a second embodiment of an apparatus for dosing a continuous elongated element according to the present invention;
figure 3 schematically shows a detail of the apparatus of figure 1;
figure 4 schematically shows a third embodiment of an apparatus for dosing a continuous elongated element according to the present invention.

### Detailed description of some embodiments of the invention

In the figures with the number 99 it is globally indicated an apparatus for dosing a continuous elongated element 900. In the present description and figures the same reference number is used for the same elements, also in their embodiments.

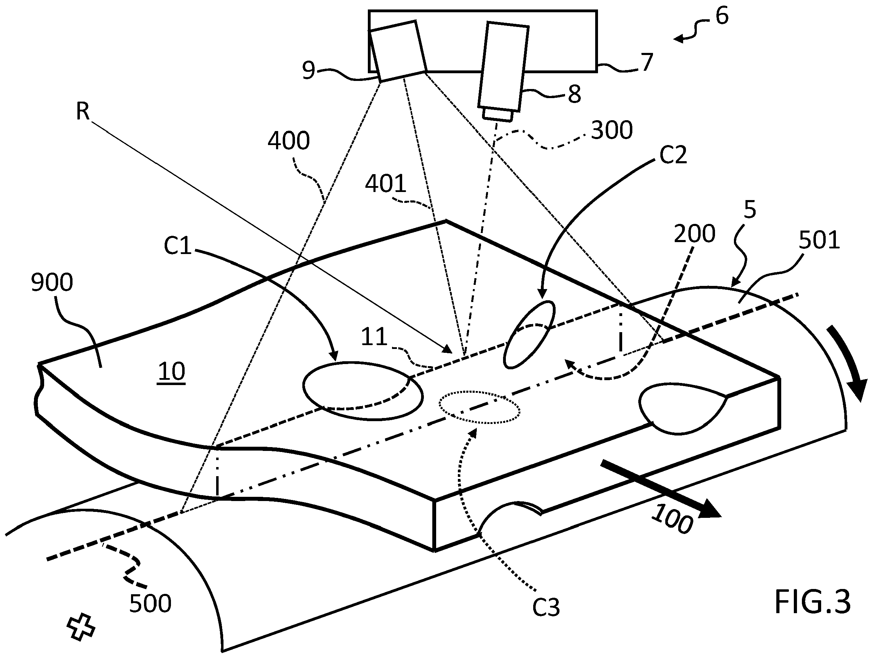

Exemplarily the continuous elongated element consists of a ribbon-like element of homogeneous green elastomeric compound. Exemplarily (figure 3) a section 200 of the continuous elongated element, perpendicular to an advancement direction 100 of the continuous elongated element, is substantially rectangular (neglecting possible defects), for example with longer sides about 50 cm long and shorter sides about 3 cm high.

The apparatus 99 comprises an advancement system 1 for advancing the continuous elongated element. Exemplarily the advancement system 1 comprises an advancement device 2 comprising a motorized roller 3 and a further roller 4 arranged parallel to, and kept in thrust against, the motorized roller 3.

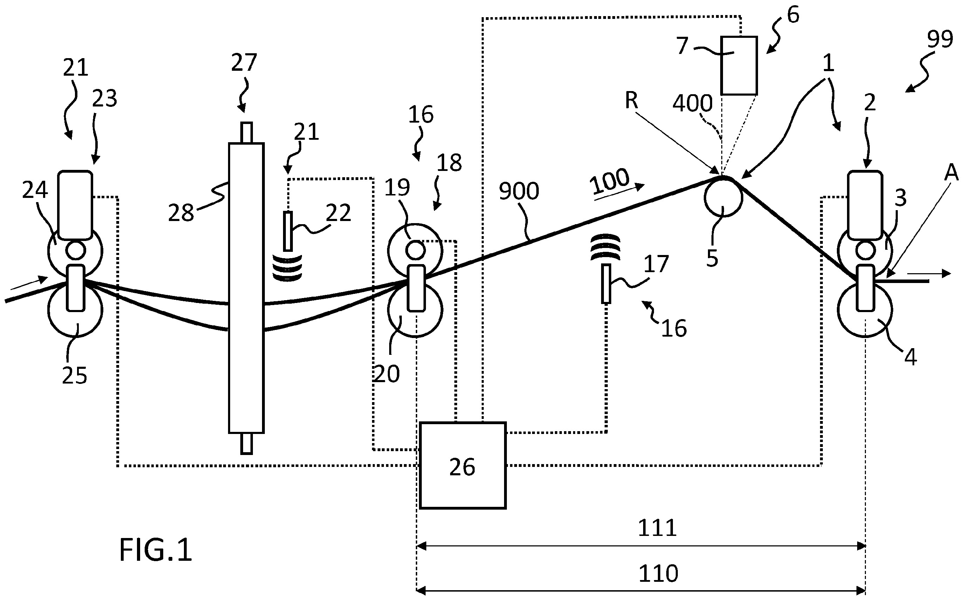

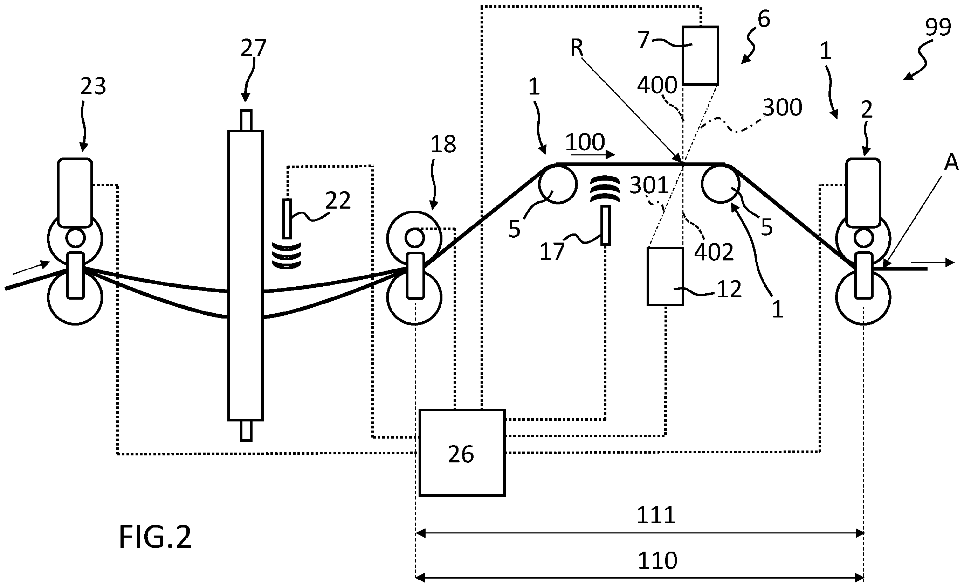

Exemplarily the advancement system 1 comprises, respectively in a first (figures 1 and 3) and in a second embodiment (figure 2), respectively one or two support rollers 5 for supporting the elongated element during the advancement.

The apparatus 99 comprises an optical detection system 6.

In the first embodiment (figures 1 and 3), exemplarily the optical detection system 6 comprises only a first optical detection device 7 (shown only schematically) comprising a matrix camera 8, having an optical axis 300, and a linear laser source 9, adapted to emit a linear laser beam 400 having a propagation axis 401, arranged with an angle of about 40° with respect to the optical axis 300. Exemplarily the first optical detection device 7 is arranged above the continuous elongated element 900 (when the latter is placed along the apparatus).

In the second embodiment shown in figure 2, the optical detection system 6 also comprises a second optical detection device 12 (shown schematically) comprising a respective matrix camera, having a respective optical axis 301, and a respective linear laser source, suitable for emitting a respective linear laser beam 402 having a respective propagation axis.

Exemplarily the second optical detection device 12 is arranged below the continuous elongated element 900.

Exemplarily the apparatus 99 comprises a first tensioning system 16 exemplarily comprising a tension sensor 17 of optical type, such as a laser device suitable for measuring a distance.

Exemplarily the first tensioning system 16 comprises a brake device 18 arranged upstream of the advancement device 2. The brake device 18 comprises, for example, a roller 19 equipped with a brake disc and a respective further roller 20 arranged parallel to, and kept in thrust against, the roller 19 equipped with brake disc.

In an alternative embodiment, the brake device can comprise a motorized device acting as a brake. For example, the motorized device acting as a brake can comprise a respective motorized roller controllable by the command and control unit and a respective further roller arranged parallel to, and kept in thrust against, the respective motorized roller, wherein the respective motorized roller is mechanically connected to a gearbox to prevent any speed variation of the motorized roller which is not impressed by the command and control unit (e.g. to prevent the motorized roller from rotating freely dragged by the elongated element).

Exemplarily the apparatus 99 comprises a second tensioning system 21 arranged upstream of the first tensioning system 16 and exemplarily comprising a respective tension sensor 22 of the same type as the tension sensor 17 of the first tensioning system 16.

Exemplarily the second tensioning system 21 comprises a movement device 23 for moving the continuous elongated element 900. Exemplarily the movement device 23 comprises a respective motorized roller 24 and a respective further roller 25 arranged parallel to, and kept in thrust against, the respective motorized roller 24.

Exemplarily the advancement device 2, the brake device 18 and the movement device 23 are structured to be able to grip the continuous elongated element and for this purpose (not shown) the surfaces of the respective rollers in contact with the elongated element have an appropriate surface treatment aimed at increasing their friction coefficient with the elongated element itself (e.g. knurling, embossing, etc.).

The apparatus 99 comprises a command and control unit 26 exemplarily connected to the motorized roller 3 of the advancement device 2, to the first optical detection device 7 and, in the second embodiment, also to the second optical detection device 12.

Exemplarily the command and control unit 26 is also connected to the roller 19 equipped with brake disc of the brake device 18, to the respective motorized roller 24 of the movement device 23 and to the tension sensors 17, 22 of the first 16 and of the second tensioning system 21.

Exemplarily the respective motorized rollers 3, 24 of the advancement device 2 and of the movement device 23 and the roller 19 equipped with brake disc of the brake device 18 are controllable by the command and control unit 26.

Exemplarily the apparatus 99 comprises a centring system 27, arranged upstream of the first tract 110 and comprising a pair of rollers 28 having respective axes of rotation arranged vertically and perpendicularly to the remaining rollers of the apparatus 1 (the latter being all horizontally arranged)
In use, the apparatus 99 allows to realize a method for dosing a continuous elongated element 900.

It is provided advancing the continuous elongated element 900 along a first tract 110 with an advancement direction 100 for feeding in continuous the continuous elongated element to a feeding point A with a feeding speed. Exemplarily the advancement of the elongated element is achieved by gripping the faces having greater surface extension of the elongated element.

Exemplarily the continuous elongated element is initially drawn in the apparatus 99 and arranged between each pair of rollers kept in reciprocal thrust, until it reaches the feeding point A. Exemplarily the elongated element is arranged above each support roller 5, the support rollers not being motorized and rotating dragged by the elongated element in advancement.

Exemplarily the advancement direction 100 is substantially aligned with a longitudinal dimension of the continuous elongated element 900 and the feeding point A is located at an outlet of the first tract 110 (fig. 1, 2 and 4).

It is provided optically detecting in continuous at a detection point R along the first tract 110 geometrical information relating to the section 200 of the continuous elongated element 900.

Exemplarily the first tract 110 comprises a detection portion 111 which contains the detection point R. The detection portion 111 exemplarily coincides with the first tract 110 in the first and in the second embodiment (figs. 1 and 2).

Exemplarily the advancement device 2 is arranged at an outlet of the detection portion 111 and it is structured for pulling the continuous elongated element 900 along the detection portion 111.

In the first and in the second embodiment of the apparatus 99, the advancement device 2 is suitable for, and arranged for, feeding the continuous elongated element 900 directly to the feeding point A.

Exemplarily the continuous elongated element 900 is centred perpendicularly to the advancement direction 100 by means of the centring system 27 which exemplarily performs a first 90° torsion of the elongated element and subsequently, together with the brake device 18, a second 90° torsion (with opposite direction with respect to the first torsion) of the elongated element to bring it back onto the original lying plane.

Exemplarily the brake device 18 is arranged at an inlet of the detection portion 111.

Exemplarily it is provided subjecting to tension the continuous elongated element 900 along the detection portion 111 by pulling, by means of the advancement device 2, the continuous elongated element at one end of the detection portion and by simultaneously braking it at an opposite end by means of the brake device 18.

Exemplarily it is provided detecting in continuous, without contact, a first tension of the elongated element along the detection portion 111 by means of the tension sensor 17 of the first tensioning system 16 which obtains the tension of the elongated element as a function of the position assumed by the latter (in figures 1 and 2, as the tension drops, the elongated element would approach the tension sensor 17 which would detect this displacement). Exemplarily it is provided, by the command and control unit 26, comparing in continuous the detected first tension with a respective reference tension and commanding in continuous the brake device 18 as a function of this comparison (for example in the event of a drop in the tension the command and control unit activates the brake to make the elongated element further stretch with a given traction).

Exemplarily it is provided subjecting to tension the continuous elongated element 900 also upstream of the detection portion 111.

Exemplarily it is provided detecting in continuous, without contact, a second tension of the continuous elongated element 900 upstream of the detection portion 111 by means of the tension sensor 22 of the second tensioning system 21 analogously to what previously described for the detection portion.

Exemplarily it is provided, by the command and control unit 26, comparing in continuous the detected second tension with a respective reference tension and commanding in continuous the movement device 23 as a function of this comparison.

Exemplarily the reference tension along the detection portion 111 is greater than the reference tension upstream of the detection portion, and the elongated element creates a slight bend upstream of the detection portion (figures 1 and 2).

In the first embodiment, detecting the geometrical information of the section 200 exemplarily includes detecting, by the first optical detection device 7, an altimetric profile of only a first portion 11 (dashed line in fig. 3) of a contour of the section 200 with respect to a reference height 500.

Exemplarily the first portion 11 of the contour is a continuous portion and extends for about 40% of a whole development of the contour of the section.

Exemplarily the first portion 11 of the contour of the section 200 belongs to a first surface 10 of the continuous elongated element 900. The first surface 10 exemplarily coincides with an upper face of the elongated element.

Exemplarily the linear laser beam 400 crosses the first surface 10 of the continuous elongated element 900 perpendicularly with respect to the longitudinal dimension of the elongated element. Exemplarily the propagation axis 401 of the linear laser beam is substantially perpendicular to the first surface 10 of the continuous elongated element.

In one alternative embodiment (not shown), the linear laser beam can cross the elongated element at any angle with respect to the advancement direction. In such cases it is possible to get back to the geometrical information of the section on a plane perpendicular to the advancement direction by means of suitable trigonometric calculations (not described further as known per se).

In the first embodiment (figure 3), to detect the altimetric profile of the first portion 11 of the contour of the section 200, it is exemplarily provided advancing the continuous elongated element with a flat surface (e.g. a lower face, not visible) in contact with a surface 501 of the support roller 5, wherein a height of the surface 501, in a point of instant contact between the latter and the elongated element, corresponds to the reference height 500. Exemplarily the optical axis 300 of the matrix camera 8 crosses (in the absence of the elongated element) a surface of the support roller 5, so that the altimetric profile directly represents the local thickness of the continuous elongated element 900.

Exemplarily detecting the altimetric profile of the first portion 11 of the contour of the section comprises:
- illuminating the first portion with the linear laser beam 400 of the first optical detection device 7;
- acquiring, by the matrix camera 8, a matrix image of a matrix portion of the first surface 10 of the continuous elongated element, the matrix portion comprising the first portion 11 of the contour, wherein the matrix image comprises a laser line reflected by the first portion 11 of the contour (exemplarily the reflected laser line coincides with the first portion 11 of the contour);
- calculating the altimetric profile by triangulation processing of the reflected laser line (thus being able to detect the depression C1 and the excess of material C2 in the shown example).

Exemplarily the calculation of the altimetric profile is performed by the optical detection system 6 which exemplarily comprises an its own internal processing unit (not shown) used for such operations.

Exemplarily the command and control unit 26 can comprise one or more computers (and for the purposes of the present invention the processing unit of the optical detection system can also be identified as part of the command and control unit 26 physically dislocated with respect to, but connected to, the latter).

In the second embodiment detecting the geometrical information of the section 200 comprises detecting, by the second optical detection device 12, an altimetric profile of also a second portion (not shown) of the contour of the section 200 with respect to a respective reference height (not shown).

Exemplarily the second portion of the contour of the section belongs to a second surface (not visible) of the continuous elongated element. Exemplarily the second surface is constituted by the lower face of the continuous elongated element, arranged at the opposite side of the continuous elongated element 900 with respect to the first surface 10. Advantageously, in the second embodiment (figure 2), the continuous elongated element is exemplarily suspended in air at the detection point R.

Exemplarily the propagation axis of the linear laser beam 402 of the second optical detection device 12 is perpendicular to the second surface.

Exemplarily (figure 2) the first 7 and the second optical detection device 12 are arranged in such a way that the respective linear laser beams 400, 402 are aligned along the advancement direction 100 in order to easily detect the first and second portion of the contour of the section.

Before the detection of the altimetric profiles, to calibrate the first 7 and the second optical detection device 12, it is exemplarily provided arranging a calibration element (e.g. a plate, not shown, having narrow construction tolerances) resting above both the support rollers 5 before they are occupied by the continuous elongated element and determining the reference heights of the altimetric profiles respectively of the first and second portion of the contour of the section 200 with respect to an upper surface (e.g. opposite to the support rollers) and a lower surface of the calibration element. The reference heights thus determined do not correspond to a physical element during the operation of the apparatus, so, once the calibration element has been removed, the detection is not hindered by fixed constructive components.

Exemplarily it is provided determining the same reference height for the altimetric profiles of the first and second portion of the contour of the section. To this end, it is exemplarily provided determining the two reference heights as a function of the calibration element as described above and displacing one of the two heights (or both) to make them coincide (for example, knowing the thickness of the calibration element, it is possible to make the lower height coincide with the upper one or vice versa, or displace both the heights so that both occupy a same intermediate position).

Exemplarily the detection of the altimetric profile of the second portion of the contour of the section is performed analogously to the detection of the altimetric profile of the first portion 11, described above.

Exemplarily, in the first and in the second embodiment, the first 11 (figure 3) and the second portion (not shown) of the contour of the section 200 develop along a whole extension of the continuous elongated element along the direction perpendicular to the advancement direction 100 (i.e. it is detected the whole width of the elongated element). Exemplarily this means that the detection of the altimetric profile of both the portions of the contour can be sufficient for detecting almost the whole contour of the section (the thickness is approximated as straight).

Exemplarily (in both the embodiments) it is provided, by the command and control unit 26, calculating in continuous a value representative of an areal extension of the section 200 of the elongated element as a function of the altimetric profile of the first 11 and possibly also of the second portion of the contour of the section.

In this regard (fig. 3), in the first embodiment, calculating in continuous the value representative of the areal extension of the section 200 exemplarily comprises calculating an area enclosed by the altimetric profile of the first portion 11 of the contour of the section 200, that is the real section is completed with a broken line (shown in fig. 3 by the segments depicted by dash-two points lines). Exemplarily possible defects located on the lower face, such as the depression C3, are not visible.

It is provided, exemplarily by the command and control unit 26 programmed for commanding in continuous the advancement system 1, adjusting in continuous the feeding speed as a function of the value representative of the areal extension and of a reference value of feeding flow rate of the continuous elongated element in the feeding point A.

Exemplarily it is provided, by the command and control unit 26 suitably programmed, calculating in continuous a theoretical value of the feeding speed as a function of a ratio between the reference value of feeding flow rate and the value representative of the areal extension of the section.

Exemplarily adjusting in continuous the feeding speed comprises setting the feeding speed equal to the theoretical value.

In the first and in the second embodiment, adjusting in continuous the feeding speed exemplarily comprises commanding in continuous the advancement device 2.

Exemplarily, it is provided, by the command and control unit 26 and as a function of the feeding speed, calculating a time delay spent by the section 200 for going from the detection point R to the feeding point A, and adjusting in continuous the feeding speed when the section 200 has reached the feeding point A.

In an alternative embodiment, not shown, the detection point R can be arranged at an outlet of the first tract, i.e. in the proximity of the feeding point A, and the feeding speed is adjusted in continuous substantially concurrently with the detection of the geometrical information (i.e. the time delay spent by the section for going from the detection point to the feeding point is neglected).

The apparatus 99 of the present invention can also be used for feeding a certain amount (e.g. mass) of material of the elongated element to a certain location (e.g. for subsequent batch feeding).

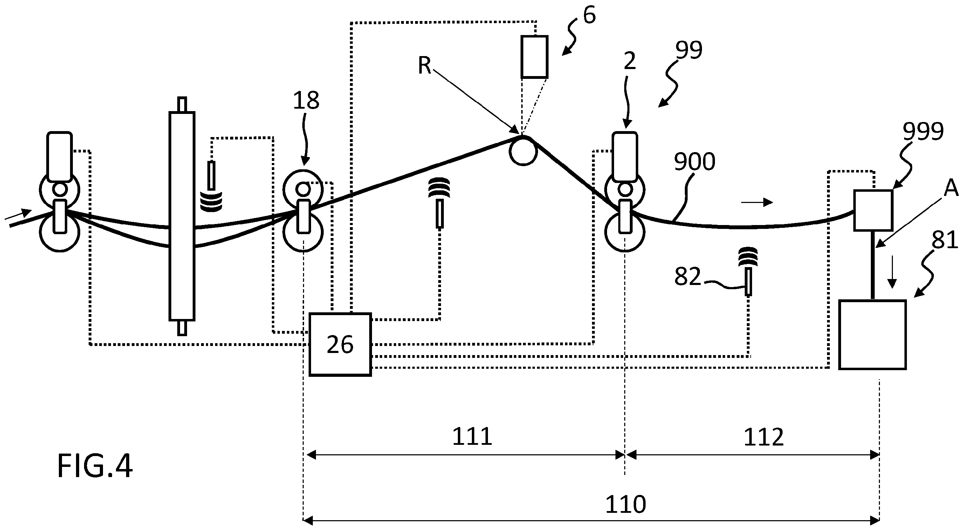

With reference to the third embodiment of the apparatus for dosing according to the present invention shown in figure 4, the first tract 110 exemplarily comprises a buffering portion 112 arranged downstream of, and continuous to, the detection portion 111, wherein an outlet of the buffering portion 112 coincides with the outlet of the first tract 110.

Exemplarily the advancement system 1 also comprises a feeding device 999 (shown schematically), distinct and separate from the advancement device 2, structured to grip the continuous elongated element and suitable for, and arranged for, feeding the continuous elongated element 900 directly to the feeding point A.

Exemplarily the feeding device 999 is arranged at the outlet of the buffering portion 112 and it is structured for pulling the continuous elongated element 900 along the buffering portion 112.

In the third embodiment, adjusting in continuous the feeding speed exemplarily comprises commanding in continuous the feeding device 999.

In the third embodiment, it is exemplarily provided detecting in continuous, without contact, a tension of the continuous elongated element 900 along the buffering portion 112, and comparing in continuous, by the command and control unit 26, the tension detected along the buffering portion 112 with a respective reference tension. To this purpose, the apparatus 99 comprises a further tension sensor 82 arranged along the buffering portion and connected to the command and control unit 26.

In the third embodiment, it is exemplarily provided commanding in continuous, by the command and control unit 26, the advancement device 2 as a function of the comparison between the tension detected along the buffering portion 112 and the respective reference tension. In this way the advancement device 2 is exemplarily commanded in cascade to the adjustment of the feeding speed.

The operation of the apparatus 99 in the third embodiment is exemplarily analogous to what described above.

It is observed that the third embodiment of the apparatus 99 can include (e.g. upstream of the buffering portion 112) both the first (with a single detection device) and the second embodiment of the apparatus (with two detection devices) as described above (exemplarily the apparatus 99 is shown in figure 4 in combination with a single optical detection device).

With the number 81 it is represented, schematically and by way of example, a continuous processing machinery for processing in continuous the elongated element 900 (e.g. a mixer and/or an extruder such as those previously mentioned).

It is observed that exemplarily the tension of the elongated element along the buffering portion 112 is lower than the tension of the portion of elongated element along the detection portion 111, in order for the elongated element to create a slight bend with purposes similar to what described with reference to the portion of continuous elongated element upstream of the detection portion 111.

In one alternative embodiment, one or more of the pairs of rollers of one or more among the advancement device, the brake device and the movement device can be replaced by a respective pair of segments of conveyor belts arranged at opposite sides with respect to the continuous elongated element (in an analogous way with respect to the rollers). These pairs of segments of conveyor belts assume the same functions as the respective pairs of rollers of the respective device and, for this purpose, the conveyor belt segments of each pair can be kept in thrust one against the other to grip the elongated element and they can be structured to be able to grip the continuous elongated element.

In one embodiment, one or more of the possible support rollers can be replaced by segments of conveyor belts with functions similar to those of the support rollers.

## Claims

1. Method for dosing a continuous elongated element (900), the method comprising:
- advancing said continuous elongated element (900) along a first tract (110) with an advancement direction (100) for feeding in continuous said continuous elongated element (900) to a feeding point (A) with a feeding speed;
- in a detection point (R) along said first tract (110) optically detecting in continuous geometrical information relating to a section (200) of said continuous elongated element (900) on a plane substantially perpendicular to said advancement direction (100);
- calculating in continuous a value representative of an areal extension of said section (200) as a function of said geometrical information; and the method being **characterised by**
- adjusting in continuous said feeding speed as a function of said value representative of the areal extension and of a reference value of feeding flow rate of said continuous elongated element (900) in said feeding point (A).

2. Method according to claim 1, comprising calculating in continuous a theoretical value of the feeding speed as a function of a ratio between said reference value of feeding flow rate and said value representative of the areal extension of said section (200), wherein adjusting in continuous said feeding speed comprises setting said feeding speed equal to said theoretical value, and wherein said feeding point (A) is at an outlet of said first tract (110), the method comprising calculating, preferably as a function of said feeding speed, a time delay spent by said section (200) for going from said detection point (R) to said feeding point (A), and wherein it is provided adjusting in continuous said feeding speed also as a function of said time delay.

3. Method according to any one of the previous claims, wherein detecting said geometrical information comprises detecting an altimetric profile of at least a first portion (11) of a contour of said section (200) with respect to a reference height (500), wherein said first portion (11) of the contour of the section (200) belongs to a first surface (10) of said continuous elongated element (900), wherein said first portion (11) of the contour is a continuous portion, and wherein said first portion (11) of the contour extends for at least a third of a whole development of the contour.

4. Method according to claim 3, wherein it is provided detecting only said altimetric profile of said first portion (11) of the contour of the section, wherein calculating in continuous said value representative of the areal extension of said section (200) comprises calculating an area enclosed by said altimetric profile of the first portion (11) of the contour of the section (200), wherein it is provided advancing the continuous elongated element with a surface of the continuous elongated element in contact with a surface (501) of a transport element (5), wherein a height of said surface (501) of the transport element (5) corresponds to said reference height (500).

5. Method according to claim 3, wherein detecting said geometrical information comprises detecting an altimetric profile of a second portion of the contour of said section (200) with respect to a respective reference height, wherein said second portion of the contour of the section (200) belongs to a second surface of said continuous elongated element (900), wherein said second surface is arranged at substantially opposite side of said continuous elongated element (900) with respect to said first surface (10), wherein the continuous elongated element (900) is suspended in air at said detection point (R), and wherein it is provided determining a same reference height for the altimetric profile of said first (11) and second portion of the contour of the section (200).

6. Method according to claim 4 or 5, wherein said first (11), and possibly second, portion of the contour of the section (200) develops/develop along substantially a whole extension of said continuous elongated element along a direction perpendicular to said advancement direction (100), and wherein detecting an altimetric profile of the first (11), and/or of a second, portion of the contour of the section (200) comprises:
- illuminating with a linear laser beam (400) respectively the first (11), and/or the second, portion of the contour;
- acquiring a matrix image of a matrix portion of surface of the continuous elongated element, said matrix portion comprising the first (11), and/or the second, portion of the contour, wherein the matrix image comprises a laser line reflected respectively by the first (11), and/or by the second, portion of the contour;
- calculating said altimetric profile by triangulation processing of the reflected laser line.

7. Method according to any one of the previous claims, wherein said first tract (110) comprises a detection portion (111) which contains the detection point (R), wherein it is provided subjecting to tension said continuous elongated element along said detection portion (111), wherein it is provided detecting in continuous a first tension of said continuous elongated element along said detection portion (111), and comparing in continuous said detected first tension with a respective reference tension, wherein it is provided commanding in continuous a first tensioning system (16) for tensioning said continuous elongated element along the detection portion (111) as a function of said comparison between the detected first tension and the respective reference tension, and wherein it is provided subjecting to tension said continuous elongated element along said detection portion (111) by pulling said continuous elongated element at one end of said detection portion (111) and at the same time by braking said continuous elongated element at an opposite end, wherein it is provided subjecting to tension said continuous elongated element upstream of said detection portion (111), wherein it is provided detecting in continuous a second tension of said continuous elongated element upstream of said detection portion (111), and comparing said detected second tension with a respective reference tension, wherein it is provided commanding in continuous a second tensioning system (21) for tensioning said continuous elongated element upstream of said detection portion (111) as a function of said comparison between the detected second tension and the respective reference tension, wherein said reference tension along said detection portion (111) is greater than said reference tension upstream of said detection portion.

8. Method according to any one of the previous claims, wherein said first tract (110) comprises a detection portion (111) which contains the detection point (R), wherein said detection portion (111) coincides with said first tract (110), wherein adjusting in continuous said feeding speed comprises commanding in continuous an advancement device (2) suitable for, and/or arranged for, feeding said continuous elongated element directly to said feeding point (A), wherein said advancement device (2) is arranged at an outlet of said detection portion (111) and it is structured for pulling said continuous elongated element along said detection portion (111).

9. Method according to any one of claims from 1 to 7, wherein said first tract (110) comprises a detection portion (111) which contains the detection point (R), and a buffering portion (112) arranged downstream of said detection portion (111), wherein an outlet of said buffering portion (112) coincides with an outlet of said first tract (110), wherein adjusting in continuous said feeding speed comprises commanding in continuous a feeding device (999) arranged at an outlet of said buffering portion (112) and structured for pulling said continuous elongated element along said buffering portion (112), wherein it is provided detecting in continuous a tension of said continuous elongated element along said buffering portion (112), and comparing in continuous said tension detected along said buffering portion (112) with a respective reference tension, and wherein it is provided commanding in continuous an advancement device (2), arranged at an outlet of said detection portion (111) and structured for pulling said continuous elongated element along said detection portion (111), as a function of said comparison between the tension detected along said buffering portion (112) and the respective reference tension, and wherein a reference tension along said detection portion (111) is greater than said reference tension along said buffering portion (112).

10. Apparatus (99) for dosing a continuous elongated element (900), the apparatus comprising:
- an advancement system (1) for advancing said continuous elongated element (900) along a first tract (110) with an advancement direction (100) for feeding in continuous said continuous elongated element (900) to a feeding point (A) with a feeding speed;
- an optical detection system (6) for detecting in continuous in a detection point (R) along said first tract (110) geometrical information relating to a section (200) of said continuous elongated element (900) on a plane substantially perpendicular to said advancement direction (100);
- a command and control unit (26) connected to said advancement system (1) and to said optical detection system (6), wherein said command and control unit (26) is programmed for:
- calculating in continuous a value representative of an areal extension of said section (200) as a function of said geometrical information; **characterized in that** the command and control unit (26) is further programmed for:
- commanding in continuous said advancement system (1) for adjusting in continuous said feeding speed as a function of said value representative of the areal extension and of a reference value of feeding flow rate of said continuous elongated element (900) in said feeding point (A).

11. Apparatus (99) according to claim 10, wherein said optical detection system (6) comprises a first optical detection device (7) comprising a matrix camera (8), having an optical axis (300), and a linear laser source (9), able to emit a linear laser beam (400) having a propagation axis (401), wherein said optical detection system (6) is structured and/or positioned for detecting at least one altimetric profile of a first portion (11) of a contour of said section (200) with respect to a reference height (500), wherein said first portion (11) of the contour of the section (200) belongs to a first surface (10) of said continuous elongated element (900), wherein said optical axis (300) or said propagation axis (401) is substantially perpendicular to said first surface (10) of the continuous elongated element (900), and wherein said optical axis (300) of the matrix camera (8) crosses a surface (501) of a transport element (5) of the continuous elongated element.

12. Apparatus (99) according to claim 11, wherein said optical detection system (6) comprises a second optical detection device (12) comprising a respective matrix camera, having a respective optical axis (301), and a respective linear laser source able to emit a respective linear laser beam (401) having a respective propagation axis, wherein said optical detection system (6) is structured and/or positioned for detecting an altimetric profile of a second portion of the contour of said section (200).

13. Apparatus (99) according to any one of claims from 10 to 12, wherein said first tract (110) comprises a detection portion (111) which contains the detection point (R), wherein said advancement system (1) comprises an advancement device (2) structured for gripping said continuous elongated element, wherein said advancement device (2) comprises a motorized roller (3) controllable by said command and control unit (26) and a further roller (4) arranged substantially parallel to, and kept in thrust against, said motorized roller (3), wherein said advancement device (2) is placed at an outlet of said detection portion (111) and is structured for pulling said continuous elongated element along said detection portion (111).

14. Apparatus (99) according to claim 13, wherein said detection portion (111) coincides with said first tract (110), and wherein said advancement device (2) is suitable for, and/or arranged for, feeding said continuous elongated element directly to said feeding point (A).

15. Apparatus (99) according to claim 13, wherein said first tract (110) comprises a buffering portion (112) placed downstream of said detection portion (111), wherein an outlet of said buffering portion (112) coincides with an outlet of said first tract (110), wherein said advancement system (1) further comprises a feeding device (999), distinct and separated from said advancement device (2), structured for gripping said continuous elongated element and suitable for, and/or arranged for, feeding said continuous elongated element, preferably directly, to said feeding point (A), wherein said feeding device (999) is placed at an outlet of said buffering portion (112) and it is structured for pulling said continuous elongated element along said buffering portion (112).

16. Apparatus (99) according to any one of the claims from 10 to 15, comprising a first tensioning system (16) for tensioning said continuous elongated element along a detection portion (111) which contains the detection point (R), and a second tensioning system (21) for tensioning said continuous elongated element upstream of said detection portion (111), wherein said first tensioning system (16) comprises a brake device (18) for at least partially braking an advancement of said continuous elongated element along said detection portion (111), wherein each of said first and second tensioning system (16, 21) comprises a respective tension sensor (17, 22) suitable for detecting in continuous a tension of said continuous elongated element, and wherein said command and control unit (26) is connected to said first (16) and second tensioning system (21).

## Patentansprüche

1. Verfahren zur Dosierung eines kontinuierlichen länglichen Elements (900), wobei das Verfahren umfasst:
- Vorschieben des kontinuierlichen länglichen Elements (900) entlang eines ersten Trakts (110) mit einer Vorschubrichtung (100) zum kontinuierlichen Befördern des kontinuierlichen länglichen Elements (900) zu einem Förderpunkt (A) mit einer Fördergeschwindigkeit;
- an einem Detektionspunkt (R) entlang des ersten Trakts (110), optisches kontinuierliches Detektieren geometrischer Informationen bezüglich eines Teilabschnitts (200) des kontinuierlichen länglichen Elements (900) auf einer Ebene, die im Wesentlichen senkrecht zu der Vorschubrichtung (100) ist;
- kontinuierliches Berechnen eines Werts, der eine Flächenausdehnung des Teilabschnitts (200) darstellt, als Funktion der geometrischen Informationen; und
wobei das Verfahren **gekennzeichnet ist durch**
- kontinuierliches Anpassen der Fördergeschwindigkeit als Funktion des Werts, der die Flächenausdehnung darstellt, und eines Referenzwerts des Förderdurchsatzes des kontinuierlichen länglichen Elements (900) an dem Förderpunkt (A).

2. Verfahren nach Anspruch 1, umfassend kontinuierliches Berechnen eines theoretischen Werts der Fördergeschwindigkeit als Funktion eines Verhältnisses zwischen dem Referenzwert des Förderdurchsatzes und dem Wert, der die Flächenausdehnung des Teilabschnitts (200) darstellt, wobei kontinuierliches Anpassen der Fördergeschwindigkeit Einstellen der Fördergeschwindigkeit gleich dem theoretischen Wert umfasst, und wobei der Förderpunkt (A) an einem Auslass des ersten Trakts (110) liegt, wobei das Verfahren Berechnen, vorzugsweise als Funktion der Fördergeschwindigkeit, einer Zeitverzögerung, die von dem Teilabschnitt (200) gebraucht wird, um von dem Detektionspunkt (R) zu dem Förderpunkt (A) zu gehen, umfasst, und wobei kontinuierliches Anpassen der Fördergeschwindigkeit auch als Funktion der Zeitverzögerung bereitgestellt wird.

3. Verfahren nach einem der vorstehenden Ansprüche, wobei Detektieren der geometrischen Informationen Detektieren eines Höhenprofils von mindestens einem ersten Abschnitt (11) einer Kontur des Teilabschnitts (200) in Bezug auf eine Referenzhöhe (500) umfasst, wobei der erste Abschnitt (11) der Kontur des Teilabschnitts (200) zu einer ersten Oberfläche (10) des kontinuierlichen länglichen Elements (900) gehört, wobei der erste Abschnitt (11) der Kontur ein kontinuierlicher Abschnitt ist, und wobei der erste Abschnitt (11) der Kontur sich über mindestens ein Drittel einer ganzen Entwicklung der Kontur ausdehnt.

4. Verfahren nach Anspruch 3, wobei Detektieren nur des Höhenprofils des ersten Abschnitts (11) der Kontur des Teilabschnitts bereitgestellt wird, wobei kontinuierliches Berechnen des Werts, der die Flächenausdehnung des Teilabschnitts (200) darstellt, Berechnen einer Fläche umfasst, die von dem Höhenprofil des ersten Abschnitts (11) der Kontur des Teilabschnitts (200) umschlossen ist, wobei Vorschieben des kontinuierlichen länglichen Elements mit einer Oberfläche des kontinuierlichen länglichen Elements in Kontakt mit einer Oberfläche (501) eines Transportelements (5) bereitgestellt wird, wobei eine Höhe der Oberfläche (501) des Transportelements (5) der Referenzhöhe (500) entspricht.

5. Verfahren nach Anspruch 3, wobei Detektieren der geometrischen Informationen Detektieren eines Höhenprofils eines zweiten Abschnitts der Kontur des Teilabschnitts (200) in Bezug auf eine jeweilige Referenzhöhe umfasst, wobei der zweite Abschnitt der Kontur des Teilabschnitts (200) zu einer zweiten Oberfläche des kontinuierlichen länglichen Elements (900) gehört, wobei die zweite Oberfläche an einer im Wesentlichen entgegengesetzten Seite des kontinuierlichen länglichen Elements (900) in Bezug auf die erste Oberfläche (10) angeordnet ist, wobei das kontinuierliche längliche Element (900) bei dem Detektionspunkt (R) in der Luft suspendiert ist, und wobei Bestimmen einer gleichen Referenzhöhe für das Höhenprofil des ersten (11) und zweiten Abschnitts der Kontur des Teilabschnitts (200) bereitgestellt wird.

6. Verfahren nach Anspruch 4 oder 5, wobei sich der erste (11) und eventuell zweite Abschnitt der Kontur des Teilabschnitts (200) im Wesentlichen entlang einer gesamten Ausdehnung des kontinuierlichen länglichen Elements entlang einer Richtung senkrecht zu der Vorschubrichtung (100) entwickelt/entwickeln, und wobei Detektieren eines Höhenprofils des ersten (11) und/oder eines zweiten Abschnitts der Kontur des Teilabschnitts (200) umfasst:
- Beleuchten jeweils des ersten (11) und/oder des zweiten Abschnitts der Kontur mit einem linearen Laserstrahl (400);
- Erfassen eines Matrixbildes eines Matrixabschnitts einer Oberfläche des kontinuierlichen länglichen Elements, wobei der Matrixabschnitt den ersten (11) und/oder den zweiten Abschnitt der Kontur umfasst, wobei das Matrixbild eine jeweils durch den ersten (11) und/oder durch den zweiten Abschnitt der Kontur reflektierte Laserlinie umfasst;
- Berechnen des Höhenprofils durch Triangulationsverarbeitung der reflektierten Laserlinie.

7. Verfahren nach einem der vorstehenden Ansprüche, wobei der erste Trakt (110) einen Detektionsabschnitt (111) umfasst, der den Detektionspunkt (R) enthält, wobei bereitgestellt ist, das kontinuierliche längliche Element entlang des Detektionsabschnitts (111) unter Spannung zu setzen, wobei bereitgestellt ist, kontinuierlich eine erste Spannung des kontinuierlichen länglichen Elements entlang des Detektionsabschnitts (111) zu detektieren und kontinuierlich die detektierte erste Spannung mit einer jeweiligen Referenzspannung zu vergleichen, wobei bereitgestellt ist, ein erstes Spannsystem (16) kontinuierlich zum Spannen des kontinuierlichen länglichen Elements entlang des Detektionsabschnitts (111) als Funktion des Vergleichs zwischen der detektierten ersten Spannung und der jeweiligen Referenzspannung anzuweisen, und wobei bereitgestellt ist, das kontinuierliche längliche Element entlang des Detektionsabschnitts (111) unter Spannung zu setzen, indem das kontinuierliche längliche Element an einem Ende des Detektionsabschnitts (111) gezogen wird und indem gleichzeitig das kontinuierliche längliche Element an einem gegenüberliegenden Ende gebremst wird, wobei bereitgestellt ist, das kontinuierliche längliche Element stromaufwärts des Detektionsabschnitts (111) unter Spannung zu setzen, wobei bereitgestellt ist, eine zweite Spannung des kontinuierlichen länglichen Elements stromaufwärts des Detektionsabschnitts (111) kontinuierlich zu detektieren und die detektierte zweite Spannung mit einer jeweiligen Referenzspannung zu vergleichen, wobei bereitgestellt ist, ein zweites Spannsystem (21) kontinuierlich zum Spannen des kontinuierlichen länglichen Elements stromaufwärts des Detektionsabschnitts (111) als Funktion des Vergleichs zwischen der detektierten zweiten Spannung und der jeweiligen Referenzspannung anzuweisen, wobei die Referenzspannung entlang des Detektionsabschnitts (111) größer ist als die Referenzspannung stromaufwärts des Detektionsabschnitts.

8. Verfahren nach einem der vorstehenden Ansprüche, wobei der erste Trakt (110) einen Detektionsabschnitt (111) umfasst, der den Detektionspunkt (R) enthält, wobei der Detektionsabschnitt (111) mit dem ersten Trakt (110) zusammenfällt, wobei kontinuierliches Anpassen der Fördergeschwindigkeit kontinuierliches Anweisen einer Vorschubvorrichtung (2), die zum Befördern des kontinuierlichen länglichen Elements direkt zu dem Förderpunkt (A) geeignet ist und/oder dazu angeordnet ist, umfasst, wobei die Vorschubvorrichtung (2) an einem Auslass des Detektionsabschnitts (111) angeordnet ist und zum Ziehen des kontinuierlichen länglichen Elements entlang des Detektionsabschnitts (111) strukturiert ist.

9. Verfahren nach einem der Ansprüche 1 bis 7, wobei der erste Trakt (110) einen Detektionsabschnitt (111), der den Detektionspunkt (R) enthält, und einen Pufferabschnitt (112) umfasst, der stromabwärts des Detektionsabschnitts (111) angeordnet ist, wobei ein Auslass des Pufferabschnitts (112) mit einem Auslass des ersten Trakts (110) zusammenfällt, wobei kontinuierliches Anpassen der Fördergeschwindigkeit kontinuierliches Anweisen einer Fördervorrichtung (999) umfasst, die an einem Auslass des Pufferabschnitts (112) angeordnet und zum Ziehen des kontinuierlichen länglichen Elements entlang des Pufferabschnitts (112) strukturiert ist, wobei bereitgestellt ist, eine Spannung des kontinuierlichen länglichen Elements entlang des Pufferabschnitts (112) kontinuierlich zu detektieren und die entlang des Pufferabschnitts (112) detektierte Spannung kontinuierlich mit einer jeweiligen Referenzspannung zu vergleichen, und wobei bereitgestellt ist, eine Vorschubvorrichtung (2), die an einem Auslass des Detektionsabschnitts (111) angeordnet ist und zum Ziehen des kontinuierlichen länglichen Elements entlang des Detektionsabschnitts (111) strukturiert ist, als Funktion des Vergleichs zwischen der entlang des Pufferabschnitts (112) detektierten Spannung und der jeweiligen Referenzspannung kontinuierlich anzuweisen, und wobei eine Referenzspannung entlang des Detektionsabschnitts (111) größer ist als die Referenzspannung entlang des Pufferabschnitts (112).

10. Einrichtung (99) zur Dosierung eines kontinuierlichen länglichen Elements (900), wobei die Einrichtung umfasst:
- ein Vorschubsystem (1) zum Vorschieben des kontinuierlichen länglichen Elements (900) entlang eines ersten Trakts (110) mit einer Vorschubrichtung (100) zum kontinuierlichen Befördern des kontinuierlichen länglichen Elements (900) zu einem Förderpunkt (A) mit einer Fördergeschwindigkeit:
- ein optisches Detektionssystem (6) zum kontinuierlichen Detektieren geometrischer Informationen bezüglich eines Teilabschnitts (200) des kontinuierlichen länglichen Elements (900) auf einer Ebene, die im Wesentlichen senkrecht zu der Vorschubrichtung (100) ist, an einem Detektionspunkt (R) entlang des ersten Trakts (110);
- eine Befehls- und Steuereinheit (26), die mit dem Vorschubsystem (1) und mit dem optischen Detektionssystem (6) verbunden ist, wobei die Befehls- und Steuereinheit (26) programmiert ist zum:
- kontinuierlichen Berechnen eines Werts, der eine Flächenausdehnung des Teilabschnitts (200) darstellt, als Funktion der geometrischen Informationen;
**dadurch gekennzeichnet, dass** die Befehls- und Steuereinheit (26) weiter programmiert ist zum:
- kontinuierlichen Anweisen des Vorschubsystems (1) zum kontinuierlichen Anpassen der Fördergeschwindigkeit als Funktion des Werts, der die Flächenausdehnung darstellt, und eines Referenzwerts des Förderdurchsatzes des kontinuierlichen länglichen Elements (900) an dem Förderpunkt (A).

11. Einrichtung (99) nach Anspruch 10, wobei das optische Detektionssystem (6) eine erste optische Detektionsvorrichtung (7) umfasst, die eine Matrixkamera (8), die eine optische Achse (300) aufweist, und eine lineare Laserquelle (9) umfasst, die einen linearen Laserstrahl (400), der eine Ausbreitungsachse (401) aufweist, emittieren kann, wobei das optische Detektionssystem (6) strukturiert und/oder positioniert ist, um mindestens ein Höhenprofil eines ersten Abschnitts (11) einer Kontur des Teilabschnitts (200) in Bezug auf eine Referenzhöhe (500) zu detektieren, wobei der erste Abschnitt (11) der Kontur des Teilabschnitts (200) zu einer ersten Oberfläche (10) des kontinuierlichen länglichen Elements (900) gehört, wobei die optische Achse (300) oder die Ausbreitungsachse (401) im Wesentlichen senkrecht zu der ersten Oberfläche (10) des kontinuierlichen länglichen Elements (900) ist, und wobei die optische Achse (300) der Matrixkamera (8) eine Oberfläche (501) eines Transportelements (5) des kontinuierlichen länglichen Elements kreuzt.

12. Einrichtung (99) nach Anspruch 11, wobei das optische Detektionssystem (6) eine zweite optische Detektionsvorrichtung (12) umfasst, die eine jeweilige Matrixkamera, die eine jeweilige optische Achse (301) aufweist, und eine jeweilige lineare Laserquelle umfasst, die einen jeweiligen linearen Laserstrahl (401), der eine jeweilige Ausbreitungsachse aufweist, emittieren kann, wobei das optische Detektionssystem (6) strukturiert und/oder positioniert ist, um ein Höhenprofil eines zweiten Abschnitts der Kontur des Teilabschnitts (200) zu detektieren.

13. Einrichtung (99) nach einem der Ansprüche von 10 bis 12, wobei der erste Trakt (110) einen Detektionsabschnitt (111) umfasst, der den Detektionspunkt (R) enthält, wobei das Vorschubsystem (1) eine Vorschubvorrichtung (2) umfasst, die zum Greifen des kontinuierlichen länglichen Elements strukturiert ist, wobei die Vorschubvorrichtung (2) eine motorisierte Walze (3), die durch die Befehls- und Steuereinheit (26) steuerbar ist, und eine weitere Walze (4) umfasst, die im Wesentlichen parallel zu der motorisierten Walze (3) angeordnet ist und in Druck gegen diese gehalten wird, wobei die Vorschubvorrichtung (2) an einem Auslass des Detektionsabschnitts (111) platziert ist und zum Ziehen des kontinuierlichen länglichen Elements entlang des Detektionsabschnitts (111) strukturiert ist.

14. Einrichtung (99) nach Anspruch 13, wobei der Detektionsabschnitt (111) mit dem ersten Trakt (110) zusammenfällt und wobei die Vorschubvorrichtung (2) zum direkten Befördern des kontinuierlichen länglichen Elements zu dem Förderpunkt (A) geeignet und/oder dazu angeordnet ist.

15. Einrichtung (99) nach Anspruch 13, wobei der erste Trakt (110) einen Pufferabschnitt (112) umfasst, der stromabwärts von dem Detektionsabschnitt (111) platziert ist, wobei ein Auslass des Pufferabschnitts (112) mit einem Auslass des ersten Trakts (110) zusammenfällt, wobei das Vorschubsystem (1) weiter eine Fördervorrichtung (999) umfasst, die sich von der Vorschubvorrichtung (2) unterscheidet und von dieser getrennt ist, die zum Greifen des kontinuierlichen länglichen Elements strukturiert ist und zum Befördern des kontinuierlichen länglichen Elements, vorzugsweise direkt, zu dem Förderpunkt (A) geeignet und/oder dazu angeordnet ist, wobei die Fördervorrichtung (999) an einem Auslass des Pufferabschnitts (112) platziert ist und zum Ziehen des kontinuierlichen länglichen Elements entlang des Pufferabschnitts (112) strukturiert ist.

16. Einrichtung (99) nach einem der Ansprüche 10 bis 15, umfassend ein erstes Spannsystem (16) zum Spannen des kontinuierlichen länglichen Elements entlang eines Detektionsabschnitts (111), der den Detektionspunkt (R) enthält, und ein zweites Spannsystem (21) zum Spannen des kontinuierlichen länglichen Elements stromaufwärts des Detektionsabschnitts (111), wobei das erste Spannsystem (16) eine Bremsvorrichtung (18) zum mindestens teilweisen Bremsen eines Vorschubs des kontinuierlichen länglichen Elements entlang des Detektionsabschnitts (111) umfasst, wobei jedes des ersten und zweiten Spannsystems (16, 21) einen jeweiligen Spannungssensor (17, 22) umfasst, der zum kontinuierlichen Detektieren einer Spannung des kontinuierlichen länglichen Elements geeignet ist, und wobei die Befehls- und Steuereinheit (26) mit dem ersten (16) und zweiten Spannsystem (21) verbunden ist.

## Revendications

1. Procédé de dosage d'un élément allongé continu (900), le procédé comprenant :
- l'avancement dudit élément allongé continu (900) le long d'une première voie (110) avec une direction d'avancement (100) pour acheminer en continu ledit élément allongé continu (900) vers un point d'alimentation (A) avec une vitesse d'alimentation ;
- la détection optique continue, en un point de détection (R) le long de ladite première voie (110), d'informations géométriques relatives à une section (200) dudit élément allongé continu (900) sur un plan sensiblement perpendiculaire à ladite direction d'avancement (100) ;
- le calcul continu d'une valeur représentative d'une extension surfacique de ladite section (200) en fonction desdites informations géométriques ; et
le procédé étant **caractérisé par**
- le réglage continu de ladite vitesse d'alimentation en fonction de ladite valeur représentative de l'extension surfacique et d'une valeur de référence du débit d'alimentation dudit élément allongé continu (900) dans ledit point d'alimentation (A).

2. Procédé selon la revendication 1, comprenant le calcul continu d'une valeur théorique de la vitesse d'alimentation en fonction d'un rapport entre ladite valeur de référence du débit d'alimentation et ladite valeur représentative de l'extension surfacique de ladite section (200), dans lequel le réglage continu de ladite vitesse d'alimentation comprend le paramétrage de ladite vitesse d'alimentation pour qu'elle soit égale à ladite valeur théorique, et dans lequel ledit point d'alimentation (A) se trouve à une sortie de ladite première voie (110), le procédé comprenant le calcul, de préférence en fonction de ladite vitesse d'alimentation, d'un délai requis par ladite section (200) pour aller dudit point de détection (R) audit point d'alimentation (A), et dans lequel est assuré le réglage continu de ladite vitesse d'alimentation également en fonction dudit délai.

3. Procédé selon l'une quelconque des revendications précédentes, dans lequel la détection desdites informations géométriques comprend la détection d'un profil altimétrique d'au moins une première partie (11) d'un contour de ladite section (200) par rapport à une hauteur de référence (500), dans lequel ladite première partie (11) du contour de la section (200) appartient à une première surface (10) dudit élément allongé continu (900), dans lequel ladite première partie (11) du contour est une partie continue, et dans lequel ladite première partie (11) du contour s'étend sur au moins un tiers de toute une évolution du contour.

4. Procédé selon la revendication 3, dans lequel est assurée la détection d'uniquement ledit profil altimétrique de ladite première partie (11) du contour de la section, dans lequel le calcul continu de ladite valeur représentative de l'extension surfacique de ladite section (200) comprend le calcul d'une surface délimitée par ledit profil altimétrique de la première partie (11) du contour de la section (200), dans lequel est assuré l'avancement de l'élément allongé continu avec une surface de l'élément allongé continu en contact avec une surface (501) d'un élément de transport (5), dans lequel une hauteur de ladite surface (501) de l'élément de transport (5) correspond à ladite hauteur de référence (500).

5. Procédé selon la revendication 3, dans lequel la détection desdites informations géométriques comprend la détection d'un profil altimétrique d'une seconde partie du contour de ladite section (200) par rapport à une hauteur de référence respective, dans lequel ladite seconde partie du contour de la section (200) appartient à une seconde surface dudit élément allongé continu (900), dans lequel ladite seconde surface est disposée sur le côté sensiblement opposé dudit élément allongé continu (900) par rapport à ladite première surface (10), dans lequel l'élément allongé continu (900) est suspendu dans l'air au point de détection (R), et dans lequel est assurée la détermination d'une même hauteur de référence pour le profil altimétrique de ladite première partie (11) et de ladite seconde partie du contour de la section (200).

6. Procédé selon la revendication 4 ou 5, dans lequel ladite première partie (11), et éventuellement ladite seconde partie, du contour de la section (200) se développe(nt) le long sensiblement de la totalité de l'extension de l'élément allongé continu selon une direction perpendiculaire à ladite direction d'avancement (100), et dans lequel la détection d'un profil altimétrique de la première partie (11), et/ou d'une seconde partie du contour de la section (200) comprend :
- l'éclairage, avec un faisceau laser linéaire (400), respectivement de la première partie (11) et/ou de la seconde partie du contour ;
- l'acquisition d'une image matricielle d'une partie matricielle de la surface de l'élément allongé continu, ladite partie matricielle comprenant la première partie (11) et/ou la seconde partie du contour, dans lequel l'image matricielle comprend une ligne laser réfléchie respectivement par la première partie (11) et/ou par la seconde partie du contour;
- le calcul dudit profil altimétrique par triangulation de la ligne laser réfléchie.

7. Procédé selon l'une quelconque des revendications précédentes, dans lequel ladite première voie (110) comprend une partie de détection (111) qui contient le point de détection (R), dans lequel est assurée la soumission à une tension dudit élément allongé continu le long de ladite partie de détection (111), dans lequel est assurée la détection continue d'une première tension dudit élément allongé continu le long de ladite partie de détection (111), et la comparaison continue de ladite première tension détectée avec une tension de référence respective, dans lequel est assurée la commande continue d'un premier système de tension (16) pour tendre ledit élément allongé continu le long de la partie de détection (111) en fonction de ladite comparaison entre la première tension détectée et la tension de référence respective, et dans lequel est assurée la soumission dudit élément allongé continu à la tension le long de ladite partie de détection (111) en tirant ledit élément allongé continu à une extrémité de ladite partie de détection (111) et en même temps en freinant ledit élément allongé continu à une extrémité opposée, dans lequel est assurée la détection continue d'une seconde tension dudit élément allongé continu en amont de ladite partie de détection (111), et la comparaison de ladite seconde tension détectée à une tension de référence respective, dans lequel est assurée la commande continue d'un second système de tension (21) pour tendre ledit élément allongé continu en amont de ladite partie de détection (111) en fonction de ladite comparaison entre la seconde tension détectée et la tension de référence respective, dans lequel ladite tension de référence le long de ladite partie de détection (111) est plus grande que ladite tension de référence en amont de ladite partie de détection.

8. Procédé selon l'une quelconque des revendications précédentes, dans lequel ladite première voie (110) comprend une partie de détection (111) qui contient le point de détection (R), dans lequel ladite partie de détection (111) coïncide avec ladite première voie (110), dans lequel le réglage continu de ladite vitesse d'alimentation comprend la commande continue d'un dispositif d'avancement (2) approprié pour, et/ou agencé pour, acheminer ledit élément allongé continu directement vers ledit point d'alimentation (A), dans lequel ledit dispositif d'avancement (2) est agencé à une sortie de ladite partie de détection (111) et il est structuré pour tirer ledit élément allongé continu le long de ladite partie de détection (111).

9. Procédé selon l'une quelconque des revendications 1 à 7, dans lequel ladite première voie (110) comprend une partie de détection (111) qui contient le point de détection (R), et une partie tampon (112) disposée en aval de ladite partie de détection (111), dans lequel une sortie de ladite partie tampon (112) coïncide avec une sortie de ladite première voie (110), dans lequel le réglage continu de ladite vitesse d'alimentation comprend la commande continue d'un dispositif d'alimentation (999) disposé à une sortie de ladite partie tampon (112) et structuré pour tirer ledit élément allongé continu le long de ladite partie tampon (112), dans lequel est assurée la détection continue d'une tension dudit élément allongé continu le long de ladite partie tampon (112), et la comparaison continue de ladite tension détectée le long de ladite partie tampon (112) avec une tension de référence respective, et dans lequel est assurée la commande continue d'un dispositif d'avancement (2), disposé à une sortie de ladite partie de détection (111) et structuré pour tirer ledit élément allongé continu le long de ladite partie de détection (111), en fonction de ladite comparaison entre la tension détectée le long de ladite partie tampon (112) et la tension de référence respective, et dans lequel une tension de référence le long de ladite partie de détection (111) est plus grande que ladite tension de référence le long de ladite partie tampon (112).

10. Appareil (99) pour doser un élément allongé continu (900), l'appareil comprenant :
- un système d'avancement (1) pour faire avancer ledit élément allongé continu (900) le long d'une première voie (110) avec une direction d'avancement (100) pour acheminer en continu ledit élément allongé continu (900) vers un point d'alimentation (A) avec une vitesse d'alimentation :
- un système de détection optique (6) pour détecter en continu en un point de détection (R) le long de ladite première voie (110) des informations géométriques relatives à une section (200) dudit élément allongé continu (900) sur un plan sensiblement perpendiculaire à ladite direction d'avancement (100) ;
- une unité de commande et de régulation (26) connectée audit système d'avancement (1) et audit système de détection optique (6), dans lequel ladite unité de commande et de régulation (26) est programmée pour :
- calculer en continu une valeur représentative d'une extension surfacique de ladite section (200) en fonction desdites informations géométriques ;
**caractérisé en ce que** l'unité de commande et de régulation (26) est en outre programmée pour :
- commander en continu ledit système d'avancement (1) pour régler en continu ladite vitesse d'alimentation en fonction de ladite valeur représentative de l'extension surfacique et d'une valeur de référence de débit d'alimentation dudit élément allongé continu (900) dans ledit point d'alimentation (A).

11. Appareil (99) selon la revendication 10, dans lequel ledit système de détection optique (6) comprend un premier dispositif de détection optique (7) comprenant une caméra matricielle (8), présentant un axe optique (300), et une source laser linéaire (9), apte à mettre un faisceau laser linéaire (400) présentant un axe de propagation (401), dans lequel ledit système de détection optique (6) est structuré et/ou positionné pour détecter au moins un profil altimétrique d'une première partie (11) d'un contour de ladite section (200) par rapport à une hauteur de référence (500), dans lequel ladite première partie (11) du contour de la section (200) appartient à une première surface (10) dudit élément allongé continu (900), dans lequel ledit axe optique (300) ou ledit axe de propagation (401) est sensiblement perpendiculaire à ladite première surface (10) de l'élément allongé continu (900), et dans lequel ledit axe optique (300) de la caméra matricielle (8) traverse une surface (501) d'un élément de transport (5) de l'élément allongé continu.

12. Appareil (99) selon la revendication 11, dans lequel ledit système de détection optique (6) comprend un second dispositif de détection optique (12) comprenant une caméra matricielle respective, présentant un axe optique respectif (301), et une source laser linéaire respective apte à émettre un faisceau laser linéaire respectif (401) présentant un axe de propagation respectif, dans lequel ledit système de détection optique (6) est structuré et/ou positionné pour détecter un profil altimétrique d'une seconde partie du contour de ladite section (200).

13. Appareil (99) selon l'une quelconque des revendications 10 à 12, dans lequel ladite première voie (110) comprend une partie de détection (111) qui contient le point de détection (R), dans lequel ledit système d'avancement (1) comprend un dispositif d'avancement (2) structuré pour saisir ledit élément allongé continu, dans lequel ledit dispositif d'avancement (2) comprend un rouleau motorisé (3) régulable par ladite unité de commande et de régulation (26) et un autre rouleau (4) disposé sensiblement parallèlement audit, et maintenu en poussée contre ledit, rouleau motorisé (3), dans lequel ledit dispositif d'avancement (2) est placé à une sortie de ladite partie de détection (111) et est structuré pour tirer ledit élément allongé continu le long de ladite partie de détection (111).

14. Appareil (99) selon la revendication 13, dans lequel ladite partie de détection (111) coïncide avec ladite première voie (110), et dans lequel ledit dispositif d'avancement (2) est approprié pour, et/ou agencé pour, acheminer ledit élément allongé continu directement vers ledit point d'alimentation (A).

15. Appareil (99) selon la revendication 13, dans lequel ladite première voie (110) comprend une partie tampon (112) placée en aval de ladite partie de détection (111), dans lequel une sortie de ladite partie tampon (112) coïncide avec une sortie de ladite première voie (110), dans lequel ledit système d'avancement (1) comprend en outre un dispositif d'alimentation (999), distinct et séparé dudit dispositif d'avancement (2), structuré pour saisir ledit élément allongé continu et approprié pour, et/ou agencé pour, acheminer ledit élément allongé continu, de préférence directement, vers ledit point d'alimentation (A), dans lequel ledit dispositif d'alimentation (999) est placé à une sortie de ladite partie tampon (112) et est structuré pour tirer ledit élément allongé continu le long de ladite partie tampon (112).

16. Appareil (99) selon l'une quelconque des revendications 10 à 15, comprenant un premier système de tension (16) pour tendre ledit élément allongé continu le long d'une partie de détection (111) qui contient le point de détection (R), et un second système de tension (21) pour tendre ledit élément allongé continu en amont de ladite partie de détection (111), dans lequel ledit premier système de tension (16) comprend un dispositif de freinage (18) pour freiner au moins partiellement un avancement dudit élément allongé continu le long de ladite partie de détection (111), dans lequel chacun desdits premier et second systèmes de tension (16, 21) comprend un capteur de tension respectif (17, 22) approprié pour détecter en continu une tension dudit élément allongé continu, et dans lequel ladite unité de commande et de régulation (26) est reliée audit premier système de tension (16) et audit second système de tension (21).
